# EUROPÄISCHE PATENTANMELDUNG

(11) **EP 1 955 798 A2**
(43) Veröffentlichungstag der Anmeldung: **13.08.2008**
(21) Anmeldenummer: 08001655.3
(22) Anmeldetag: 29.01.2008
(51) Int. Cl.: B23D 21/04, B23D 25/02

(54) **Trenneinrichtung für im Wesentlichen lineare Werkstücke und Verfahren zum Trennen von im Wesentlichen linearen Werkstücken**

(30) Priorität: 08.02.2007 DE 102007007061
(71) Anmelder: Schumag AG, 52076 Aachen (DE)
(72) Erfinder: Kudrus, Heiner, 4700 Eupen (BE)
(74) Vertreter: Reuther, Martin

(57) **Zusammenfassung**

Um Trennmethoden von linearen Werkstücken (109) weiter zu entwickeln, schlägt die Erfindung eine Trenneinrichtung für im Wesentlichen lineare Werkstücke, insbesondere für im Wesentlichen kontinuierlich zugeführte, lineare Werkstücke, vor, bei welcher ein Trennschlitten (115,116) gemeinsam mit dem Werkstück bewegt wird und eine an dem Schlitten vorgesehene Trennvorrichtung während dieser Bewegung das Werkstück trennt und bei welcher die Trenneinrichtung sich durch mindestens zwei hintereinander angeordnete Trennschlitten (115,116) auszeichnet.

## Beschreibung

Die Erfindung betrifft einerseits eine Trenneinrichtung für im Wesentlichen lineare Werkstücke, insbesondere für im Wesentlichen kontinuierlich zugeführte, lineare Werkstücke, bei welcher ein Trennschlitten gemeinsam mit dem Werkstück bewegt wird und eine an dem Trennschlitten vorgesehene Trennvorrichtung während dieser Bewegung das Werkstück trennt. Des Weiteren betrifft die Erfindung ein Verfahren zum Trennen von im Wesentlichen linearen Werkstücken, insbesondere von im Wesentlichen kontinuierlich zugeführten linearen Werkstücken.

Aus dem Stand der Technik sind Trenneinrichtungen für im Wesentlichen lineare Werkstücke, wie beispielsweise für Rohre aus Kupfer oder Aluminium, die auch in Coilform verarbeitet sein können, bekannt.

So werden unterschiedlichste Rohre beispielsweise mit Rollenmessern, die das Rohr an seinem Umfang einschneiden, in Rohrstücke mit vorgegebenen Rohrlängen getrennt, indem das Rollenmesser an das Rohr an der gewünschten Stelle angesetzt und dann um das Rohr herum geführt wird. Gegebenenfalls wird ein solches Trennen unterstützt, indem das Rohr zusätzlich nachträglich auf Zug oder Biegung beansprucht wird. Hierbei brauchen die Rollenmesser an der vorgesehenen Schnittstelle die Wandung des Rohres nicht vollständig zu durchtrennen, da der eigentliche Trennvorgang dann durch das Biegen oder Ziehen erfolgt. Ein entsprechendes Beispiel offenbart die US 4,552,047.

Insbesondere gegenüber spanenden Trennverfahren, bei welchen ein Rohr beispielsweise mittels einer Kaltkreissäge in Rohrstücke in beliebigen Rohrlängen abgelängt wird, zeichnen sich Trennverfahren mit Rollenmessern dadurch aus, dass wesentlich weniger beziehungsweise kein Materialverlust beim Trennen erzielt wird.

Ausführlich sind Trennverfahren mit Rollenmessern beispielsweise in der Fachzeitschrift Bänder, Bleche, Rohre 1-1980 in dem Artikel von R. Bardolette "Gratfreies und formtreues Ablängen" beschrieben.

Darüber hinaus ist in dem US-Patent US 4,111,346 eine stationäre Vorrichtung beschrieben, mittels welcher Rohre in unterschiedliche Längen getrennt werden können, wobei die Rohre hierzu an ihrem Umfang angeschnitten und anschließend gebrochen werden, so dass das Rohr an dem Anschnitt bricht.

Des Weiteren sind aus dem Stand der Technik hinlänglich fliegende Scheren bekannt, welche auch bei bewegten Werkstücken eine Trennung ermöglichen, indem sie mit dem Werkstück mitbewegt werden und das Rohr dann an einer bestimmten Stelle mit einem schnellen Schlag durchtrennen. Derartige Schlagtrennungen haben jedoch den Nachteil, dass die Rohrenden erheblichen Belastungen unterzogen und in der Regel deformiert werden. Auch die US 3,771,393 offenbart eine Trenneinrichtung, mit einem rotierenden Schneidmesser, welches mit dem Werkstück mitbewegt wird, wobei auch dieses die Rohrenden erheblich belastet.

Es ist Aufgabe vorliegender Erfindung, bekannte Methoden zum Trennen von Rohren, insbesondere mit Rollenmessern, weiter zu entwickeln und effektiver zu gestalten.

Die Aufgabe der Erfindung wird von einer Trenneinrichtung für im Wesentlichen lineare Werkstücke, insbesondere für im Wesentlichen kontinuierlich zugeführte, lineare Werkstücke gelöst, bei welcher ein Trennschlitten gemeinsam mit dem Werkstück bewegt wird und eine an dem Trennschlitten vorgesehene Trennvorrichtung während dieser Bewegung das Werkstück trennt und bei welchen sich die Trenneinrichtung sich durch wenigstens zwei hintereinander angeordnete Trennschlitten auszeichnet.

Vorteilhafter Weise ist es durch die zwei hintereinander angeordneten Trennschlitten möglich, auch sehr kurze Rohrstücke zu schneiden, ohne hierfür die Transportgeschwindigkeit des zu trennenden Werkstückes derart zu reduzieren, dass die gesamte Trenneinrichtung in ihrer Leistung uneffektiv gedrosselt werden muss. Vielmehr ist es vorliegend möglich, die Rohrlängen der Rohrstücke durch Modulation der Relativgeschwindigkeit und/oder der Relativbewegung der beiden Trennschlitten zueinander und/oder zu der Transportgeschwindigkeit des Werkstückes anzupassen. Idealerweise können selbst kurze Rohrlängen bei maximaler Transportgeschwindigkeit des Rohres geschnitten werden.

Vorzugsweise durchlaufen die Trennschlitten jeweils einen zyklischen Bewegungsablauf, wobei insbesondere eine lineare Vor- und Rückbewegung ausführen können. Vorzugsweise sind die Bewegungen der Trennschlitten synchronisiert, wobei dieses sich auf die Taktung der zyklischen Bewegung bezieht und insbesondere nicht zwingend eine gleichlaufende Bewegung der Trennschlitten impliziert. Die Trennschlitten können jedoch auch asynchron gefahren werden, solange sie während des eigentlichen Schneidens mit gleicher Geschwindigkeit wie das Rohr bewegt werden.

Dementsprechend wird die Aufgabe der Erfindung auch von einem Verfahren zum Trennen von im Wesentlichen linearen Werkstücken, insbesondere von im Wesentlichen kontinuierlich zugeführten, linearen Werkstücken, gelöst, welches sich dadurch auszeichnet, dass zwei hintereinander angeordnete Trennschlitten mit einem Phasenversatz vor- und zurückbewegt werden.

Mittels eines solchen Phasenversatzes der beiden Trennschlitten lassen sich die zu schneidenden Rohrlängen in bisher noch nicht bekannter Weise modulieren. Auf diese Weise können insbesondere bei vorgegebenem Abstand der Trennschlitten voneinander und bei vorgegebener Werkstückgeschwindigkeit variable Werkstücklängen abgelängt werden.

Vorzugsweise kann eine um das Werkstück herum umlaufende Schneideinrichtung vorgesehen sein, die an einem Trennschlitten mit dem Werkstück während des Schneidens bewegt wird und um dieses herum zum Schneiden läuft.

Es erweist sich als vorteilhaft, wenn eine derartige umlaufende Trenn- bzw. Schneideinrichtung, wie beispielsweise ein oder mehrere Trennmesser, das Werkstück schneiden, während dieses Werkstück mit einer Transportgeschwindigkeit bewegt wird. Hierdurch lässt sich die Schneidleistung gegenüber Methoden, bei welchen das Werkstück nicht kontinuierlich vorwärts bewegt wird, vorteilhaft steigern.

Ebenso wird die Aufgabe von einem Verfahren zum Trennen von im Wesentlichen linearen Werkstücken, insbesondere auch von im Wesentlichen kontinuierlich zugeführten, linearen Werkstücken mittels einer Schneideinrichtung, die vorzugsweise während des Trennens mit dem Werkstück bewegt wird, gelöst, bei welchem das Werkstück beidseits einer Trennfläche ergriffen und unter Zug mit einer Schneideinrichtung an der Trennfläche geschnitten wird.

In diesem Zusammenhang bezeichnet der begriff "Trennfläche" eine Ebene, entlang welcher ein Werkstück getrennt werden soll und letztlich auch im Rahmen der Genauigkeit des gewählten Trennverfahrens getrennt wird.

Wird ein Rohr zum Trennen unter einer Zugbeanspruchung geschnitten, kann ein Trennvorgang schneller realisiert werden, als bei einem Trennen ohne zusätzliche Zugbeanspruchung.

Dass ein Werkstück beidseits einer Trennfläche ergriffen und unter Zug mit einer Schneideinrichtung an der Trennfläche geschnitten wird, ist aus dem Stand der Technik bisher noch nicht bekannt. Zwar ist es aus dem Artikel von R. Bardolette "Gratfreies und formtreues Ablängen" in der Fachzeitschrift Bänder, Bleche, Rohre 1-1980 sowie aus der US 4,111,346 oder US 4,552,047 bekannt, dass Werkstücke angeschnitten und dann durch nachträgliches Ziehen oder Brechen getrennt werden können; Hinweise, gleichzeitig unter Zug mit einer Schneideinrichtung ein Werkstück zu bearbeiten, liefern diese Druckschriften jedoch nicht. Durch eine geeignete Abstimmung der Zugkräfte auf den gleichzeitig stattfindenden Schneidvorgang lässt sich neben der Trenngeschwindigkeit auch die Trennkante in vorteilhafter Weise modulieren. Dieses ermöglicht es, auf eine weitere Nachbehandlung der Trennstelle, beispielsweise auf ein Entgraten zu verzichten, da durch den Zug eine Abrisskante erzeugt werden kann, die beispielsweise weder radial innerhalb noch radial außerhalb über eine Rohrwandung hinauskragt. Insbesondere ist ein Schneidvorgang unter Zug im Zusammenhang mit einem mit einem Werkstück mitbewegten Trennschlitten nicht bekannt.

Eine Verfahrensvariante sieht dem entsprechend vor, dass der Schneidvorgang und das Ziehen derart aufeinander abgestimmt sind, dass die hierbei erzeugte Trennkante eine gedehnte Rohrwandung und/oder eine Reiß- oder Bruchkante aufweist. Hierdurch ist sichergestellt, dass ein Rohr bereits getrennt wird, bevor eine Schneideinrichtung die Rohrwandung vollständig durchschnitten hat.

Auch wird die Aufgabe der Erfindung unabhängig von Vorstehendem von einem Verfahren zum Trennen von im Wesentlichen linearen Werkstücken, insbesondere auch von im Wesentlichen kontinuierlich zugeführten, linearen Werkstücken mittels einer Schneideinrichtung, die während des Trennens mit dem Werkstück bewegt wird, gelöst, welches sich dadurch auszeichnet, dass das Werkstück beidseits einer Trennfläche ergriffen und unter Zug oder Bruch getrennt wird. Zwar hat diese Lösung den Nachteil, dass die Bewegungsabläufe zwischen Werkstück und Trennschlitten einerseits und zwischen einer den Zug ausübenden Halterung und einer Trenneinrichtung auf dem Trennschlitten andererseits verhältnismäßig komplex werden. Diesem lässt sich jedoch insbesondere dadurch begegnen, dass die Halterung und die Trenneinrichtung auf einem Trennschlitten angeordnet werden. Andererseits hat die Lösung den überraschenden Vorteil, dass die beiden Werkstückteile nach dem Trennen, obgleich sie noch gemeinsam mit dem Trennschlitten in Bewegung sind, einen kleinen Abstand voneinander aufweisen, so dass nachfolgende Werkstückführungen oder Zwischenwerkstückführungen die beiden Werkstückteile einfacher von einander getrennt fördern können, so dass sie auch einfacher vereinzelt werden können. Diese Problematik tritt bei ruhender Trenneinrichtung und ruhendem Werkstück nicht auf, so dass an dieser Stelle die Trennung unter Zug oder Bruch bei einem mit dem Werkstück bewegten Trennschlitten überraschende Vorteile bringt.

Um Trennschlitten unabhängig voneinander bewegen zu können, ist es vorteilhaft, wenn wenigstens ein Trennschlitten für seine Bewegung mit dem Werkstück unabhängig von den übrigen Trennschlitten angetrieben ist. Durch unabhängig voneinander arbeitende Antriebe ist es auf baulich besonders einfache Weise möglich, die Geschwindigkeit der Trennschlitten zueinander zu variieren und damit die Länge der abgetrennten Werkstückabschnitte über die Phase der Schlitten zu modulieren.

Für das Einstellen insbesondere kürzerer Rohrlängen ist es des Weiteren vorteilhaft, wenn die Bewegungsbahnen der Trennschlitten sich überlappen. Die Trennschlitten beschreiben bei ihrem Hin- und Herbewegen jeweils für sich eine Bewegungsbahn. Überlappen sich die Bewegungsbahnen zweier Trennschlitten steht eine weitere Rohrlängenvariation zur Verfügung. Hierbei muss jedoch darauf geachtet werden, dass die Trennschlitten mit sich überlappenden Bewegungsbahnen phasenversetzt zueinander laufen, um eine Kollision der Trennschlitten im Überlappungsbereich zu verhindern. Außerdem kann auf Grund der Überlappung auf Zwischenführungen für das Rohr verzichtet werden, da der Übergabeweg von einer ersten Werkstückführung eines ersten Trennschlittens auf eine zweite Werkstückführung eines zweiten Trennschlittens sich hierdurch stark reduzieren lässt. Dies ist besonders im Zusammenhang mit kleinen Rohrlängen vorteilhaft, die von dem ersten bzw. vorderen Trennschlitten geschnitten wurden und weitertransportiert werden müssen.

Unter Umständen können die Trennschlitten auf getrennten Führungen laufen. Auf diese Weise kann ein Überlapp der Bewegungsbahnen, der letztlich nicht für die jeweiligen Schlitten an sich kritisch ist, sondern lediglich in Bezug auf die Baugruppen jedes Trennschlittens, welche auf dem Weg des Werkstücks liegen bzw. welche die Werkstücke umgreifen, von Bedeutung ist. Auf diese Weise ist es möglich, den Abstand zwischen den Trennmitteln bzw. zwischen den das Werkstück umgreifenden Baugruppen weiter verringert werden, wobei einer derartige Ausgestaltung insbesondere bei Trennschlitten, bei welchen die Führungseinrichtungen und die Antriebe wesentlich größer als etwaige Trennmittel, wie beispielsweise eine Anordnung aus ziehend wirksamen Halteeinrichtungen und umlaufenden Schneidmessern, vorteilhaft ist.

Damit bei zwei hintereinander angeordneten Trennschlitten entlang der Werkstückachse für eine ausreichende Rohrführung gesorgt ist, sieht eine Ausführungsvariante vor, dass an wenigstens einem Trennschlitten eine Werkstückführung vorgesehen ist.

Vorteilhafter Weise können durch eine derartige bewegliche Werkstückführung Teilabschnitte zwischen zwei Werkstückführungen, die beispielsweise ortsfest an der Trenneinrichtung vorgesehen sind, überbrückt werden, insbesondere für Rohrstücke, die mittels des ersten Trennschlittens bereits geschnitten und weiter zu dem zweiten Trennschlitten transportiert werden müssen. Dieses ist insbesondere bei überlappenden Bewegungsbahnen von Vorteil, da eine zwischen den Trennschlitten angeordnete Werkstückführung den Trennschlitten im Wege wäre.

Übersteigen die zu überbrückenden Teilabschnitte jedoch eine kritische Länge, ist es vorteilhaft, wenn eine Zwischenwerkstückführung vorhanden ist, die zwischen zwei Trennschlitten unabhängig von deren Bewegungsabläufen angeordnet ist. Mittels einer derartigen Zwischenwerkstückführung kann ein bereits geschnittenes Werkstück insbesondere von einem ersten Trennschlitten zu einem zweiten Trennschlitten ausreichend geführt bewegt werden, ohne dass sich einer der beiden Trennschlitten mit dem geschnittenen und weiter zu transportierenden Werkstück im Eingriff befinden muss.

Es versteht sich, dass die beschriebene Zwischenwerkstückführung beliebig an der Trenneinrichtung angebracht sein kann. Insbesondere kann die Zwischenwerkstückführung verlagerbar befestigt sein. So kann die Zwischenwerkstückführung auch gemeinsam mit einem Werkstück bewegt werden, insbesondere um eine möglichst sichere Führung zu gewährleisten und ggf. den Trennschlitten ausweichen zu können. Baulich besonders einfach ist es jedoch, wenn die Zwischenwerkstückführung ortsfest angeordnet ist.

Eine weitere Ausführungsvariante sieht vor, dass wenigstens eine Zwischenwerkstückführung gemeinsam mit dem Werkstück bewegbar angeordnet ist. Hierbei kann die Zwischenwerkstückführung das Werkstück zumindest abschnittsweise fest ergreifen, um gegebenenfalls in Zusammenarbeit mit einer weiteren Einrichtung Zug- oder Biegekräfte auf das Werkstück auszuüben. Auch ist es denkbar, dass die Zwischenwerkstückführung eigene Fördermittel für das Werkstück aufweist, um beispielsweise für einen Vortrieb oder für ein Abbremsen des Werkstücks zu sorgen. Alternativ kann die Zwischenwerkstückführung jedoch passiv ausgestaltet sein, so dass sie lediglich ein geführtes Weitergleiten des Werkstückes ermöglicht.

In diesem Zusammenhang sei erwähnt, dass ggf. auch mehr als zwei Trennschlitten vorgesehen sein können. Die Zahl der Trennschlitten hängt insbesondere von der Werkstückgeschwindigkeit und der minimalen Zyklusdauer für die Bewegung der Trennschlitten bzw. der gewünschten abzulängenden Werkstücklängen ab. Können diese beiden Kenngrößen nicht aufeinander abgestimmt werden, so ist ein weiterer Trennschlitten vorteilhaft. Höhere Werkstücklängen können dann durch den vorstehend beschriebenen Phasenversatz erreicht werden, während bei gegebener Werkstückgeschwindigkeit und gegebener minimaler Zyklusdauer für die Bewegung der Trennschlitten die minimale Werkstücklänge bei in Phase umlaufenden Trennschlitten erreicht werden sollte.

Auch kann eine Trenneinrichtung umlaufende Mittel zur spanlosen Trennung des Werkstückes umfasst.

Die vorliegende Trenneinrichtung hat gegenüber dem Stand der Technik den Vorteil, dass sie wesentlich schneller arbeitet und darüber hinaus mit einer getakteten Zufuhr arbeiten kann, als dies ortsfeste, umlaufende Schneideinrichtungen bisher in der Lage sind. Darüber hinaus hat die vorliegende Trenneinrichtung gegenüber mitlaufenden Schlagscheren den Vorteil, dass sie einen wesentlich besseren Schnitt und damit eine wesentlich hochwertigere Trenn-Schnittstelle an den Werkstücken hinterlässt.

Vorteilhaft ist es, wenn die Trennmittel eine umlaufende Schneideinrichtung umfassen. Hierdurch ist sichergestellt, dass ein sauberer Schnitt umlaufend um das Werkstück gebildet und eine exakte, nicht mehr nachzubearbeitende Schnittkante ausgebildet werden kann.

Ein besonders sauberer Schnitt entsteht, wenn die Schneideinrichtung ein Schneidmesser umfasst. Zudem sind Schneidmesser sehr verschleißfest.

Vorteilhaft ist es, wenn das Schneidmesser ein um den Außendurchmesser außen umlaufendes rotierendes Schneidmesser ist. Mittels eines solchen außen umlaufenden Schneidmesser lassen sich besonders hohe Schnittleistungen erzielen, wobei umlaufende rotierende Schneidmesser an sich technisch auch gut bekannt und somit entsprechend beherrschbar sind.

Eine besonders exakte Trennung des linearen Werkstückes wird erzielt, wenn das Schneidmesser ein umlaufendes Messer mit Innenschneidkante ist. Hierdurch lässt sich die Gefahr von Materialstauchungen insbesondere an der Rohraußenseite verringern.

Darüber hinaus ist es vorteilhaft, wenn die Trenneinrichtung ein rotierendes Futter für ein Trennwerkzeug umfasst. Mittels des rotierenden Futters können insbesondere Schneidmesser vorteilhaft gelagert und geführt werden.

Um einen erforderlichen Durchmesserwechsel hinsichtlich eines zu schneidenden Rohres an der Schneideinrichtung vorteilhaft einzustellen, ist es vorteilhaft, wenn das umlaufende Futter radial verschiebbare Trennmesserhalter für wenigstens ein Trennwerkzeug und Mittel zum radialen Verlagern der Trennmesserhalter für einen Trennvorgang aufweist. Durch die Trennmesserhalter kann eine sichere Führung des Trennwerkzeugs bzw. der Trennwerkzeuge gewährleistet werden.

Damit die Trennvorrichtung insbesondere radial besonders kompakt baut, ist es vorteilhaft, wenn die Verlagerungsmittel einen Kniehebel umfassen, wobei vorzugsweise ein Arm des Kniehebels an den Trennmesserhalter und ein anderer Arm des Kniehebels an einem Halteteil, wie beispielsweise an Haltebacken, für das Trennwerkzeug angeordnet ist und die Verlagerungsmittel an dem Knie angreifen. Mittels dieser Kniehebelkonstruktion können axiale Eingangskräfte besonders vorteilhaft in radiale Haltekräfte umgelenkt werden. Als Halteteil eignen sich insbesondere mitrotierende Baugruppen, wobei diese beispielsweise zu Einstellzwecken radial verlagerbar ausgestaltet sein können, so dass einfach verschiedene Werkstückdurchmesser bearbeitet werden können.

Darüber hinaus ist vorteilhaft, wenn die Verlagerungsmittel eine Schubplatte, vorzugsweise eine mit der Trenneinrichtung umlaufende Schubplatte, umfassen. Hierdurch ist eine besonders einfache Synchronisation mehrerer Messer und/oder Schneidwerkzeuge realisiert.

Eine besonders kostengünstige Ausführungsvariante sieht vor, dass die Trenneinrichtung durch Fliehkräfte geöffnet wird. Ein Öffnen der Trenneinrichtung mittels Fliehkräfte macht eine Rückholmechanik für ein radiales Verlagern der Trennwerkzeuge vom Werkstück weg überflüssig.

Hierbei ist es besonders vorteilhaft, wenn die Trennwerkzeuge zumindest über zwei Trennvorgänge hinweg konstant umlaufen bzw. durchgehend rotieren. Anfahr- und Abbremsvorgänge für die Trennwerkzeuge, die lediglich Zeit und Energie kosten, können auf diese Weise minimiert werden. Insbesondere können dann auch größere Massen, deren Beschleunigungsvorgänge entsprechend mehr Zeit und Energie kosten, wie beispielsweise Stellmotoren oder sonstige Antriebe, mitumlaufen. Auch können dann besonders betriebssicher und einfach die Fliehkräfte, wie vorstehend beschrieben, ggf. entsprechend genutzt werden. Zum Trennen werden lediglich die Trenneinrichtung bzw. Trenneinrichtungen entsprechend angestellt und anschließend wieder geöffnet, vorzugsweise ohne die Rotationsgeschwindigkeit zu variieren.

Um die Trenneinrichtung flexibel und besonders schnell auf unterschiedliche Werkstückdurchmesser einstellen zu können, ist es vorteilhaft, wenn die Trenneinrichtung bzw. die Trennvorrichtung Mittel zum radialen Einstellen der Trennmittel hinsichtlich unterschiedlicher Werkstückdurchmesser aufweist. Die Trennmittel sind durch die radialen Einstellmittel gegenüber der Werkstückachse vorzugsweise derart radial verstellbar, dass die vorliegende Trenneinrichtung selbst auf große Werkstückdurchmesserunterschiede schnell und unkompliziert eingestellt werden kann.

Eine in diesem Zusammenhang besonders vorteilhafte Ausführungsvariante sieht vor, dass die Einstellmittel Haltebacken umfassen, an welchen die Trennmittel oder Trennmittelhalterungen gelagert sind.

Der Begriff "Haltebacken" beschreibt vorliegend Mittel zum radialen Einstellen, die radial um die Werkstückachse angeordnet und radial zu dieser Werkstückachse verstellbar gelagert sind. Die Haltebacken werden vorzugsweise nur dann radial verstellt, wenn die Trenneinrichtung an einen anderen Werkstückdurchmesser angepasst werden soll. Die Haltebacken werden insbesondere bei dem eigentlichen Zustellen der Trennmittel zum Schneiden, während des Schneidens und nach dem Schneiden in der Regel nicht verstellt. Für den Zustellvorgang sowie für das Öffnen sind die Trennmittel selbst radial verlagerbar an dem Trennschlitten, vorzugsweise radial verlagerbar an den Haltebacken, angeordnet.

Als vorteilhaft hat sich erwiesen, wenn an den Haltebacken ein Kniehebel, insbesondere ein Arm eines Kniehebels, gelagert ist. Somit ist dann auch die Verstellmechanik für Trennmittel vorteilhaft gegenüber der Werkstückachse gemeinsam mit den Haltebacken verstellbar an den Haltebacken gelagert.

Wenn die Haltebacken an dem Trennschlitten in Bezug auf eine Werkstückachse radial verstellbar gelagert sind, ist ein Anpassen des Trennschlittens selbst an unterschiedlichste Werkstückdurchmesser problemlos möglich.

Des Weiteren wird die Aufgabe der Erfindung von einer Trenneinrichtung für im Wesentlichen lineare Werkstücke, insbesondere für im Wesentlichen kontinuierlich zugeführte, lineare Werkstücke, bei welcher ein Trennschlitten gemeinsam mit dem Werkstück bewegt und eine an dem Trennschlitten vorgesehene Trennvorrichtung während dieser Bewegung des Werkstücks trennt, gelöst, welche sich dadurch auszeichnet, dass an dem Trennschlitten wenigstens zwei Halteeinrichtungen vorgesehen sind, welche, entlang der Werkstückachsen gesehen, beidseits einer Trennvorrichtung angeordnet sind, wobei wenigstens eine der beiden Halteeinrichtungen entlang der Werkstückachse bezüglich der anderen Halteeinrichtung und/oder bezüglich des Trennschlittens bzw. bezüglich der Trennvorrichtung verlagerbar ist.

Hierdurch kann auf konstruktiv einfache Weise ein Werkstück unter Zug geschnitten werden, wobei dieses dann wesentlich früher und insbesondere bei vorgegebenen Bedingungen betriebssicher reißt, als wenn erst geschnitten und anschließend eine Zugbeanspruchung auf das lineare Werkstück eingeleitet wird.

Mittels der beidseits der Trennvorrichtung angeordneten Halteeinrichtungen kann einerseits unter Umständen ein besonders exaktes Halten und Führen auch von geschnittenen Rohrstücken vorteilhaft gewährleistet. Insbesondere können mittels der beidseitigen Halteeinrichtungen zusätzliche Kräfte, wie beispielsweise Zugkräfte, auf ein Werkstück aufgebracht werden, welche Trennvorgänge am Werkstücke wesentlich begünstigen, wie bereits vorstehend beschrieben.

Hierbei hat sich herausgestellt, dass durch das Schneiden bei gleichzeitiger Zugspannung die Zugspannung als maßgebliche Größe den Trennvorgang zu beeinflussen scheint. Insofern kann bei vorgegebener Zugspannung, die letztlich entsprechend auch zu einer vorgegebenen Verformung des Werkstücks im Bereich der Trennstelle führt, die Trennstelle betriebssicher immer entsprechend gleich ausgeführt werden. Bei vorgegebener Zugspannung können dann die Trennmittel, wie beispielsweise ein Schneidmesser, so lange umlaufen und schneiden, bis der Schnitt ausreichend tief ist, so dass die Zugspannung das Werkstück an der entsprechenden Stelle reißt.

Es versteht sich, dass eine Zwischenwerkstückführung, die zwischen zwei Trennschlitten insbesondere auch selbst unabhängig vom Bewegungsablauf der Trennschlitten angeordnet ist, auch unabhängig von übrigen Merkmalen vorliegender Erfindung für eine Trenneinrichtung vorteilhaft ist. Selbiges gilt für die Verlagerungsmittel, wenn diese einen Kniehebel und/oder eine Schubplatte umfassen, sowie für einen durch Fliehkräfte zu öffnenden Schneidkopf und die Mittel zum radialen Einstellen der Trennmittel.

Weitere Vorteile, Ziele und Eigenschaften vorliegender Erfindung werden anhand der Beschreibung anliegender Zeichnung erläutert, in welcher beispielhaft vorliegende Trenneinrichtung, deren Bewegungs- und Schneidabläufe sowie Bauteile der Trenneinrichtung dargestellt sind.

Es zeigen
- Figur 1: schematisch eine Seitenansicht eines Tandemtrenners mit zwei voneinander unabhängig angetriebenen Trennschlitten,
- Figur 2: schematisch eine Seitenansicht eines Tandemtrenners mit zwei voneinander unabhängig angetriebenen Trennschlitten und mit stationären Wegmessmitteln,
- Figur 3: schematisch eine Seitenansicht eines Tandemtrenners mit zwei voneinander unabhängig angetriebenen Trennschlitten und mit mitfahrenden Wegmessmitteln,
- Figuren 4 bis 8: schematisch einen Bewegungs- und Schneidablauf eines Singletrenners mit einem Trennschlitten im Zusammenhang mit einem Geschwindigkeit/OrtDiagramm,
- Figuren 9 bis 13: schematisch einen phasengleichen Bewegungs- und Schneidablauf eines Tandemtrenners mit zwei von-einander unabhängig angetriebenen Trennschlitten im Zusammenhang mit einem Geschwindigkeit/Ort-Diagramm,
- Figuren 14 bis 18: schematisch einen phasengleichen Bewegungs- und Schneidablauf eines Tandemtrenners mit zwei voneinander unabhängig angetriebenen Trennschlitten im Zusammenhang mit einem Geschwindigkeit/OrtDiagramm mit überschneidenden Bewegungsbahnen,
- Figuren 19 bis 28: schematisch einen phasenversetzten Bewegungs- und Schneidablauf eines Tandemtrenners mit zwei voneinander unabhängig angetriebenen Trennschlitten im Zusammenhang mit einem Geschwindigkeit/Ort-Diagramm,
- Figuren 29 bis 33: schematisch einen weiteren phasenversetzten Bewegungs- und Schneidablauf eines Tandemtrenners mit zwei voneinander unabhängig angetriebenen Trennschlitten im Zusammenhang mit einem Geschwindigkeit/Ort-Diagramm,
- Figur 34: schematisch eine perspektivische Ansicht eines weiteren Tandemtrenners mit zwei voneinander unabhängig angetriebenen Trennschlitten,
- Figur 35: schematisch eine perspektivische Ansicht eines Trennkopfes eines Trennschlittens,
- Figur 36: schematisch einen Querschnitt des Trennkopfes aus der Figur 35,
- Figur 37: schematisch einen Längsschnitt des Trennkopfes aus den Figuren 35 und 36, und
- Figuren 38 und 39: schematisch einen Trennvorgang mit dem Trennkopf aus den Figuren 35 bis 37, und
- Figuren 40 und 41: den Trennkopf bei verschiedenen Rohrdurchmessern.

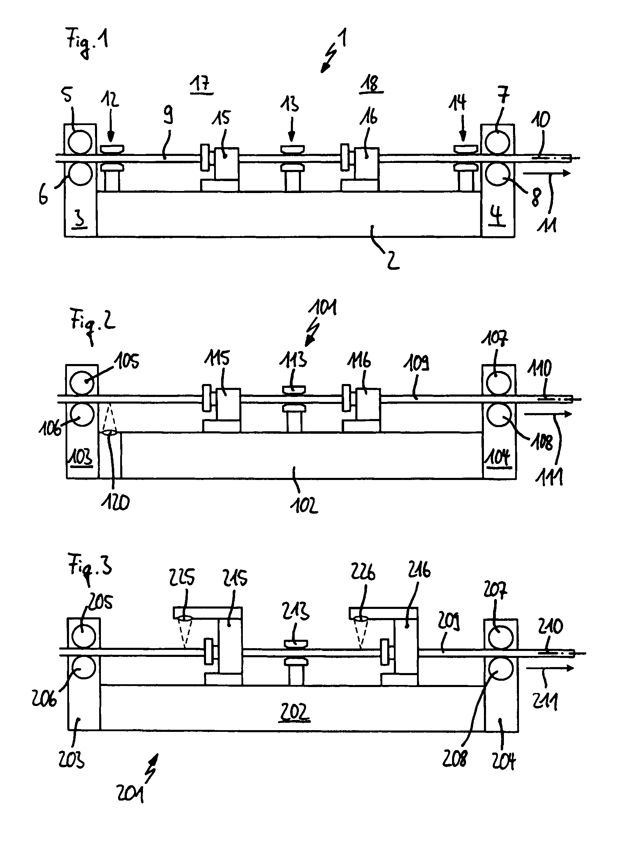

Der in der Figur 1 gezeigte Tandemtrenner 1 umfasst ein Gestell 2 mit einem Einlaufbereich 3 und einem Auslaufbereich 4. Der Einlaufbereich 3 umfasst eine erste Einlaufbereichrolle 5 und eine zweite Einlaufbereichrolle 6. Dementsprechend umfasst der Auslaufbereich 4 eine erste Auslaufbereichrolle 7 und eine zweite Auslaufbereichrolle 8. Mittels der Rollen 5, 6, 7 und 8 wird im Wesentlichen ein Rohr 9 entlang einer Werkstückachse 10 gemäß Transportrichtung 11 von dem Einlaufbereich 3 zum Auslaufbereich 4 durch den Tandemtrenner 1 geführt und bewegt.

Zwischen dem Einlaufbereich 3 und dem Auslaufbereich 4 sind bei vorliegendem Ausführungsbeispiel eine Einlaufbereichführung 12, eine Mittenbereichführung 13 und eine Auslaufbereichführung 14 vorgesehen, welche bei geeigneter Ausgestaltung als Werkstückhalter bzw. Zwischenwerkstückhalter dienen, um das Rohr 9 oder ein bereits abgetrenntes Rohrstück (hier nicht gezeigt) des Rohres 9 ergänzend oder unabhängig von den Rollen 5, 6, 7, 8 und/oder ergänzend oder unabhängig von Trennschlitten 15 oder 16 entlang des Tandemtrenners 1 zu führen. Hierbei können diese Führungen aktiv oder passiv, also antreibend oder lediglich führend, ausgestaltet sein. Gegebenenfalls können die Führungen 12, 13 und/oder 14 auch zum Aufnehmen von Sensoren (hier nicht explizit dargestellt), wie beispielsweise einem induktiv arbeitenden Sensor, dienen. Als Sensoren eignen sich prinzipiell sämtliche Sensoren, die geeignet sind, die Geschwindigkeit und/oder die Position des Werkstückes bzw. die Position eines Werkstückbereiches zu ermitteln. Insbesondere sind diesbezüglich die vorgenannten induktiv arbeitenden Sensoren zu nennen. Allerdings können auch optische Sensoren oder Ultraschallsensoren zur Anwendung kommen. Besonders geeignet scheinen auch geschwindigkeitssensitive Sensoren, wie beispielsweise über den Dopplereffekt arbeitende optische Sensoren oder Ultraschallsensoren.

Darüber hinaus pendeln unabhängig voneinander der erste Trennschlitten 15 und der zweite Trennschlitten 16 zwischen dem Einlaufbereich 3 und dem Auslaufbereich 4 entlang der Werkstückachse 10 in Bezug auf die Transportrichtung 11 vor beziehungsweise zurück.

Je nachdem wie der erste Trennschlitten 15 und der zweite Trennschlitten 16 in ihren jeweiligen Pendelbereichen 17, 18 zueinander bewegt werden, beispielsweise mit einer phasengleichen Vor- und Rückbewegung oder phasenversetzt zueinander, kann die Rohrlänge eines herzustellenden Rohrstückes variiert werden. Der Pendelbereich 17 des ersten Trennschlittens 15 erstreckt sich im Wesentlichen zwischen der Einlaufbereichführung 12 und der Mittenbereichführung 13, wohingegen der Pendelbereich 18 des zweiten Trennschlittens 16 sich im Wesentlichen zwischen dem Auslaufbereichführung 14 und der Mittenbereichführung 13 erstreckt.

Der in der Figur 2 gezeigte Tandemtrenner 101 hat im Wesentlichen den gleichen Aufbau wie der Tandemtrenner 1 aus der Figur 1. So umfasst er ein Gestell 102 mit einem Einlaufbereich 103 und einem Auslaufbereich 104. Der Einlaufbereich 103 umfasst Einlaufbereichrollen 105 und 106, der Auslaufbereich 104 umfasst Auslaufbereichrollen 107 und 108. Entlang einer Werkstückachse 110 wird ein Rohr 109 in Transportrichtung 111 durch den Tandemtrenner 101 geleitet. In diesem Ausführungsbeispiel umfasst der Tandemtrenner 101 lediglich eine Mittenbereichführung 113, der auch das Werkstück führende Funktionen übernimmt und der von einem optischen arbeitenden Sensor 120 ergänzt ist, welcher stationär unmittelbar hinter dem Einlaufbereich 103 platziert ist. Zwischen dem Einlaufbereich 103 und dem Auslaufbereich 104 fährt auch bei diesem Ausführungsbeispiel ein erster Trennschlitten 115 und ein zweiter Trennschlitten 116 vor und zurück.

Im Gegensatz zu dem Tandemtrenner 101 aus der Figur 2 weist ein anderer Tandemtrenner 201 (siehe Figur 3) zwei auf einer Werkstückachse 210 mobile optische Sensoren 225 und 226 auf. Zusätzlich ist eine feststehende Zwischenführung 213 vorgesehen, an welcher bei diesem Ausführungsbeispiel, in Abweichung von den vorstehend beschriebenen Ausführungsbeispielen kein Sensor angeordnet ist.

Die beiden optischen Sensoren 225 und 226 sind entlang der Werkstückachse 210 verfahrbar. Um dies baulich besonders einfach zu realisieren, ist der erste mobile optische Sensor 225 an einen ersten Trennschlitten 215 und der zweite mobile optische Sensor 226 an einen zweiten Trennschlitten 216 befestigt. Die beiden optischen Sensoren 225, 226 können hierbei im Wesentlichen die Position und insbesondere auch die genaue Geschwindigkeit eines Rohres 209 erfassen, welches gemäß der Transportrichtung 211 entlang der Werkstückachse 210 durch den Tandemtrenner 201 von einem Einlaufbereich 203 zu einem Auslaufbereich 204 transportiert wird. Die beiden optischen Sensoren 225, 226 können vorliegend der Bewegung des Rohres 209 problemlos über die Trennschlitten 215 und 216 folgen.

Die Trennschlitten 215, 216 pendeln, an einem Gestell 202 geführt, zwischen dem Einlaufbereich 203 und dem Auslaufbereich 204 bezüglich der Transportrichtung 211 in der bereits für die vorstehenden Ausführungsbeispiele beschriebenen Weise vor und zurück, wobei auch bei diesem Ausführungsbeispiel der Einlaufbereich 203 zwei Einlaufbereichrollen 205 und 206 und der Auslaufbereich 204 zwei Auslaufbereichrollen 207 und 208 umfassen.

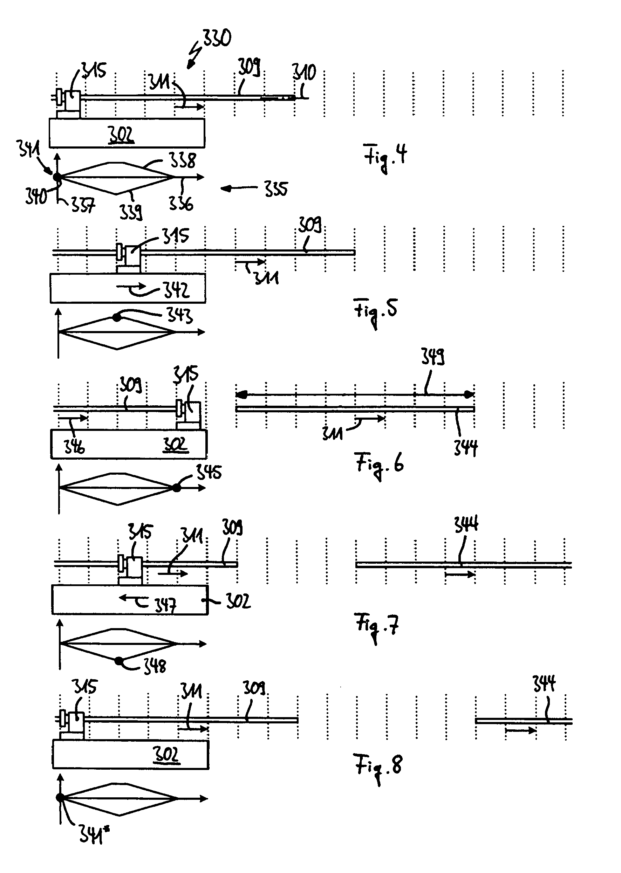

Der in den Figuren 4 bis 8 gezeigte bekannte Singletrenner 330, welcher im Wesentlichen zur Erläuterung des Bewegungsablaufes und der dem erfindungsgemäßen Tandemtrenner zugrunde liegenden Aufgabenstellung dargestellt wird, umfasst ein Gestell 302, an welchem ein Trennschlitten 315 bewegbar gelagert ist. Der Singletrenner 330 hat eine Werkstückachse 310, entlang welcher ein Rohr 309 gemäß der Transportrichtung 311 bewegt wird.

Der Bewegungsablauf des Trennschlittens 315 ist in einem Koordinatensystem 335 näher illustriert, bei welchem auf der Abszisse 336 der jeweils aktuelle Ort des Trennschlittens 315 und an der Ordinate 337 die zum jeweiligen Ort vorliegende Geschwindigkeit des Trennschlittens 315 dargestellt ist. Hierbei zeigt eine obere Kurve 338 (positiv) den Geschwindigkeitsverlauf des Trennschlittens 315 in seiner Vorwärtsbewegung, also in Transportrichtung 311. Eine untere Kurve 339 (negativ) zeigt den Geschwindigkeitsverlauf des Trennschlittens in seiner Rückwärtsbewegung, also entgegengesetzt der Transportrichtung 311. Mit einem Positionsmarker 340 wird die aktuelle Position des Trennschlittens 315 im Geschwindigkeit/Ort-Koordinatensystem 335 gekennzeichnet.

Bei dem in den Figuren 4 bis 8 gezeigten Ausführungsbeispiel befindet sich der Trennschlitten 315 nach der Figur 4 in einer Startposition 341 mit einer Geschwindigkeit Null. Im weiteren Verlauf (siehe Figur 5) wird der Trennschlitten 315 auf die Transportgeschwindigkeit 342 beschleunigt, die der Geschwindigkeit des Rohres 309 in Transportrichtung 311 entspricht. Während des Zeitraums, in welchem sich der Trennschlitten 315 mit Transportgeschwindigkeit 342 bewegt, wird das Rohr 309 geschnitten und hierbei eine gewünschte Rohrstücke 344 (siehe Figur 6) von dem Rohr 309 abgetrennt. Anschließend wird der Trennschlitten abgebremst und in einer Umkehrposition 345 kehrt sich die Vorwärtsbewegung des Trennschlittens 315 in eine Rückwärtsbewegung 347 um, wobei der Trennschlitten 315 zunächst beschleunigt und ab einer Bremsposition 348 in eine Startposition* 341* abgebremst wird und das Rohr mit konstanter Geschwindigkeit 346 weiter läuft.

Der Ort der Startposition 341 und der Ort der Startposition* 341* sind identisch, jedoch zeigt der zusätzliche Marker * an, dass die Startposition* 341* zeitlich hinter der Startposition 341 eingenommen wird.

Mittels des Singeltrenners 330 lassen sich Rohrstücke 344 einer ersten Rohrlänge 349 von einem Rohr 309 trennen.

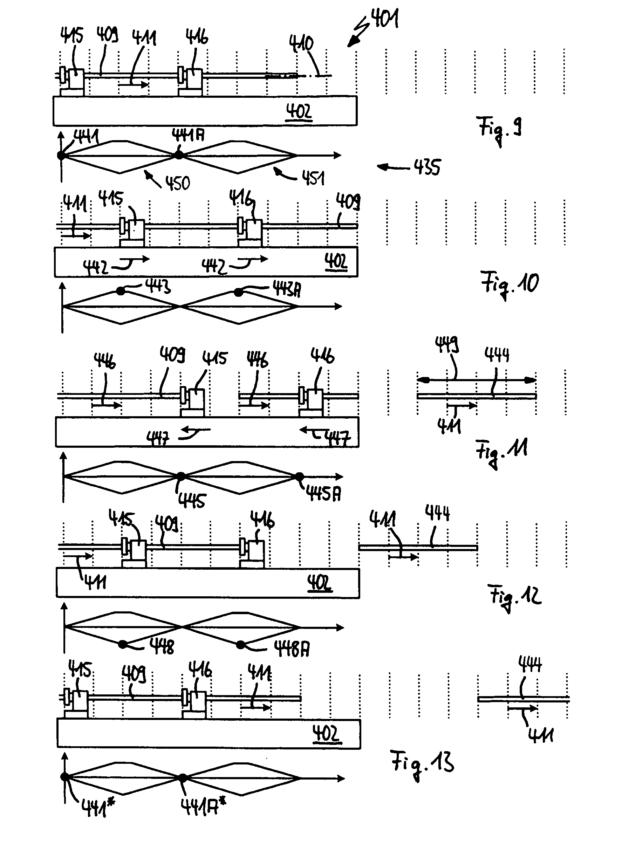

Der in den Figuren 9 bis 13 gezeigte Verfahrensablauf zeigt einen Tandemtrenner 401 mit einem Gestell 402, an welchem ein erster Trennschlitten 415 und ein zweiter Trennschlitten 416 gelagert ist. Ein Rohr 409 wird gemäß Transportrichtung 411 entlang einer Werkstückachse 410 des Tandemtrenners 401 bewegt.

Die Bewegungsabläufe der beiden Trennschlitten 415, 416 sind in einem Geschwindigkeit/Ort-Koordinatensystem 435 illustriert. Da bei diesem Ausführungsbeispiel beide Trennschlitten 415, 416 mit einem identischen Bewegungsmuster betrieben werden, ergeben sich im Geschwindigkeit/Ort-Koordinatensystem 435 zwei identische Bewegungsgrafilcen 450 und 451, wobei die erste Bewegungsgrafik 450 den Bewegungsablauf des ersten Trennschlittens 415 und die zweite Bewegungsgrafik 451 den Bewegungsablauf des zweiten Trennschlittens 416 darstellen.

Der Übersichtlichkeit halber werden die beiden identischen Bewegungsabläufe der beiden Trennschlitten 415, 416 im Wesentlichen anhand der ersten Bewegungsgrafik 450 erläutert. Im Übrigen entsprechen die beiden Bewegungsgrafiken 450, 451 jeweils der Darstellung des Geschwindigkeit/Ort-Koordinatensystems 335 des Singletrenners 330.

Aus einer Startposition 441 beschleunigt der Trennschlitten 415 und aus einer Startposition 441A beschleunigt der Trennschlitten 416 jeweils auf eine Transportgeschwindigkeit 442, wobei der Trennschlitten 415 das Rohr 409 in einer Trennposition 443 und der Trennschlitten 416 das Rohr 409 in einer Trennposition 443A idealerweise im Wesentlichen zeitgleich in einzelne Rohrstücke 444 mit der zweiten Rohrlänge 449 trennen.

Sind die Trennvorgänge vorüber, werden beide Trennschlitten 415, 416 abgebremst und die Vorwärtsbewegung kehrt sich in einer Umkehrposition 445, 445A in eine Rückwärtsbewegung 447 um. Ab einer Bremsposition 448 bzw. 448 A wird die Rückwärtsbewegung 447 bis in eine weitere Startposition* 441* bzw. 441A* heruntergebremst, so dass der nächste Schneidzyklus beginnen kann.

Wie unmittelbar ersichtlich, können durch diese Vorgehensweise bei gleichen Randbedingungen, also bei gleicher Geschwindigkeit 446 des Rohres 409 und bei gleicher Maximalgeschwindigkeit der Trennschlitten bzw. gleicher minimaler Zyklusdauer, bei diesem Ausführungsbeispiel doppelt so kurze Rohrstücke 444 abgelängt werden, wie Rohrstücke 344 bei dem Singletrenner 330 nach Figuren 4 bis 8. Dieses ist auch in den Figuren durch die entsprechende Strichelung dargestellt.

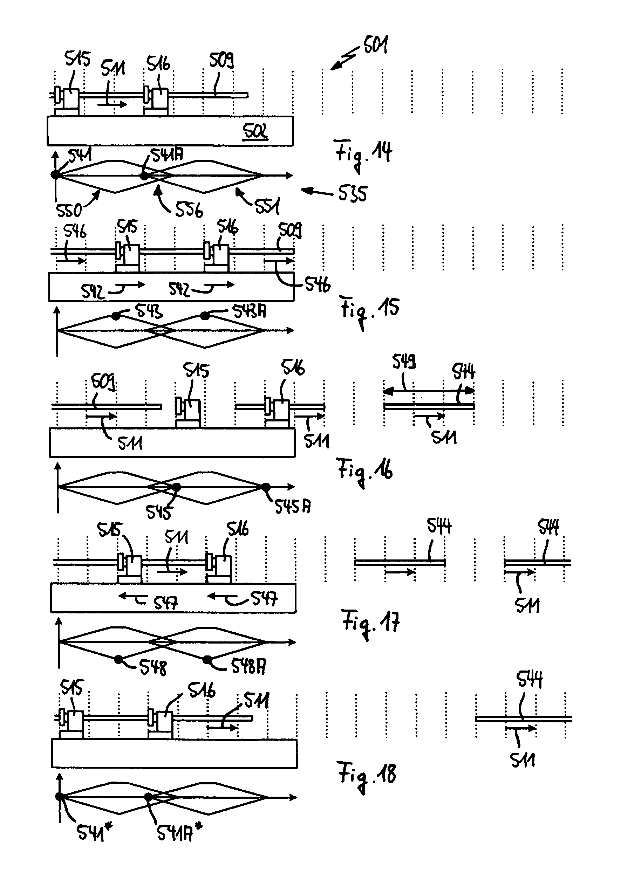

In den Figuren 14 bis 18 ist anhand eines weiteren Tandemtrenners 501 und einem diesem zugeordneten Geschwindigkeit/Ort-Koordinatensystem 535 ein phasengleicher Bewegungszyklus beispielhaft dargestellt, mit welchem noch kürzere Rohrstücke 544 mit einer dritten Rohrlänge 549 aus einem Rohr 509 herausgeschnitten werden können.

Bei diesem Ausführungsbeispiel überschneiden sich die beiden Bewegungsabläufe eines ersten Trennschlittens 515 und eines zweiten Trennschlittens 516 zumindest in einem Überlappungsbereich 556. Die Bewegungsabläufe der beiden Trennschlitten 516, 515 sind im Übrigen identisch und entsprechen vorliegend einer ersten Bewegungsgrafik 550 und einer zweiten Bewegungsgrafik 551, die sich im Überlappungsbereich 556 überlagern.

Der Bewegungszyklus des ersten Trennschlittens 515 startet in einer ersten Startposition 541, während der Bewegungszyklus des zweiten Trennschlittens 516 in einer zweiten Startposition 541 A beginnt. Die beiden Trennschlitten 515, 516 werden auf eine Transportgeschwindigkeit 542 beschleunigt (Figur 15) und bei Erreichen der Transportgeschwindigkeit 542 das Rohr 509 getrennt. Anschließend wird diese Vorwärtsbewegung 542 bis in eine Umkehrposition 545 bzw. 545A abgebremst (Figur 16) und in eine Rückwärtsbewegung 547 umgekehrt (Figur 17), so dass die beiden Trennschlitten 515, 516 jeweils in eine Startposition* 541* bzw. 541A* gelangen.

Vorraussetzung für die kürzeren Rohrstücke 544 mit der dritten Rohrlänge 549 sind jedoch entweder eine geringere Werkstückgeschwindigkeit 546 des Rohres 509 oder aber eine höhere Zyklus- bzw. Maximalgeschwindigkeit der Trennschlitten 515, 516. Ansonsten werden bei dieser Verfahrensführung ungleichmäßig lange Rohrstücke 544 abgelängt. Insbesondere durch den Überlapp lassen sich jedoch unter begrenzten Raumverhältnissen, wie beispielsweise bei einer begrenzten Maximallänge für das Gestell 502 noch entsprechende Rohrstücklängen erreichen, wenn die Geschwindigkeit der Trennschlitten 515, 516 ausreichend hoch gewählt werden kann.

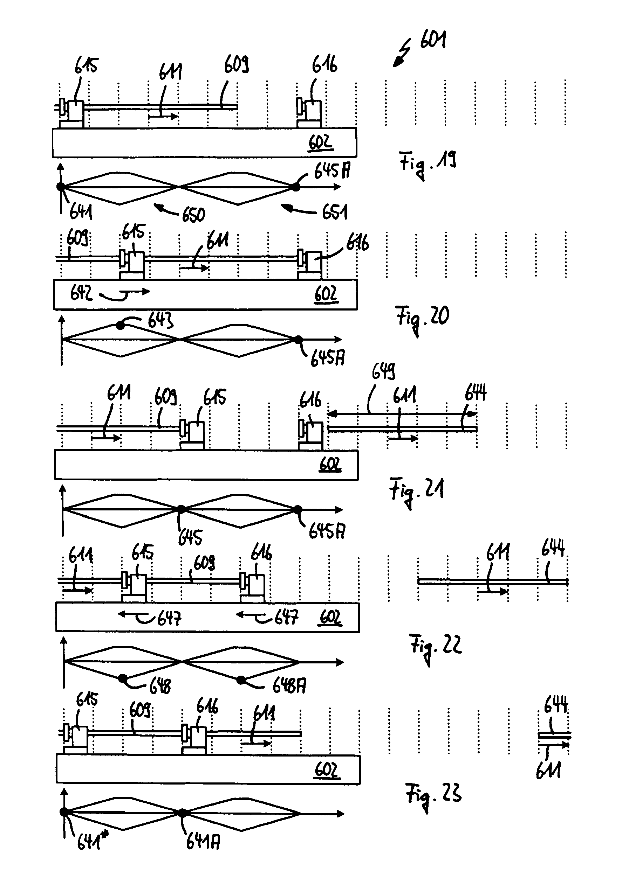

Wie beispielhaft in den Figuren 19 bis 28 dargestellt, können die abzutrennenden Rohrstücke 644 mit einer vierten Rohrlänge 649 (siehe Figur 21) auch dadurch variiert werden, dass Bewegungsabläufe von Trennschlitten 615, 616, wie anhand einer ersten Bewegungsgrafik 650 und einer zweiten Bewegungsgrafik 651 gezeigt, phasenversetzt verlaufen. Auf Grund dieses Phasenversatzes kann bei gleicher Gesamtausgestaltung die Rohrlänge 649 des abgetrennten Rohrstückes 644 variiert werden.

Gemäß der Darstellung nach Figur 19 befindet sich der erste Trennschlitten 615 in einer Startposition 641, während der zweite Trennschlitten 616 sich in einer Umkehrposition 645A befindet, in welcher er wartet. Ein Rohr 609 wird in Transportrichtung 611 durch den Tandemtrenner 601 geführt.

Der erste Trennschlitten 615 wird nun auf eine Transportgeschwindigkeit 642 beschleunigt (Figur 20), wobei er in einer Trennposition 643 das durch den Tandemtrenner 601 geleitete Rohr 609 trennt. Der zweite Trennschlitten 616 wartet nach wie vor in der Umkehrposition 645A. Nach dem Trennvorgang wird der erste Trennschlitten 615 weiter in eine erste Umkehrposition 645 bewegt. Gemäß der Darstellung der Figur 21 befinden sich beide Trennschlitten 615, 616 in ihrer jeweiligen Umkehrposition 645, 645A. Aus diesen Umkehrpositionen 645, 645A beschleunigen die beiden Trennschlitten 615, 616 mittels einer Rückwärtsbewegung 647 in eine Bremsposition 648 bzw. in eine Bremsposition 648A und werden anschließend ab dieser Bremsposition 648 bzw. 648A in eine weitere erste Startposition* 641* bzw. in eine zweite Startposition 641A zurückverlagert, damit der Bewegungszyklus des Tandemtrenners 601 erneut beginnen kann (siehe Figur 23).

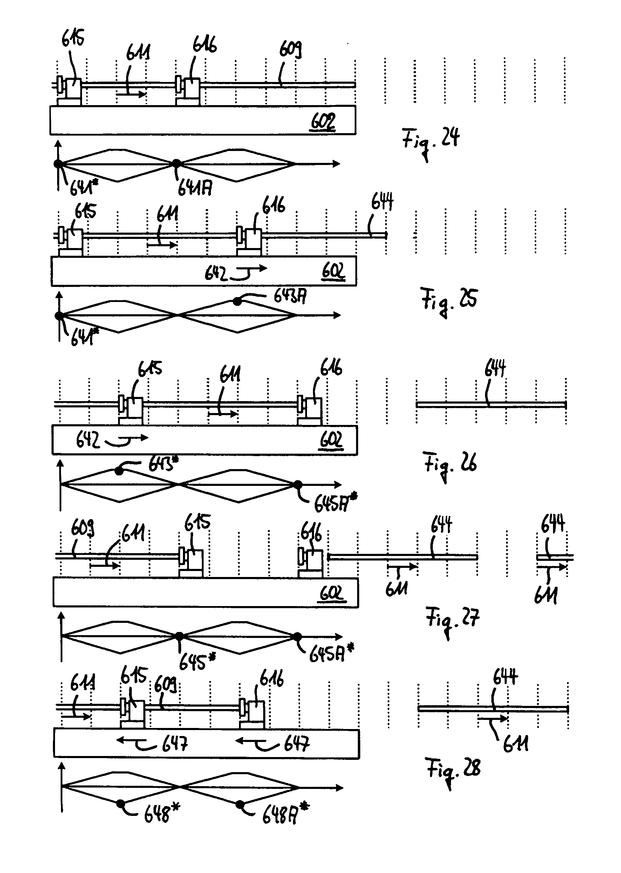

Beide Trennschlitten 615, 616 verharren dort einen Moment, bis genügend Rohr 609 in die Transportrichtung 611 weitergeführt wurde (siehe Figur 24). Erst dann beschleunigt der zweite Trennschlitten 616 in Transportrichtung 611 und schneidet in der zweiten Trennposition 643A ein weiteres Rohrstück 644 mit der Rohrlänge 649 ab, während der erste Trennschlitten 615 noch in seiner Startposition* 641* verbleibt (siehe Figur 25).

Anschließend beschleunigt auch der erste Trennschlitten 615 in Transportrichtung 611 auf Transportgeschwindigkeit 642, um in der ersten Trennposition* 643* erneut das Rohr 609 durchzutrennen, und der zweite Trennschlitten 616 wird wieder in die zweite Umkehrposition 645A* verlagert. Ist ein weiteres Rohrstück 644 mit der Rohrlänge 649 mittels des ersten Trennschlittens 615 geschnitten (Figur 26), bewegt sich der erste Trennschlitten 615 wieder in seine erste Umkehrposition* 645*.

Beide Trennschlitten 615, 616 beschleunigen nun mit der Rückwärtsbewegung 647 bis in die jeweilige Bremsposition 648* und 648A*, um anschließend wieder in die erste Startposition* 641* bzw. in die Startposition 641A zu gelangen (vergleiche Figur 23). Auf diese Weise kann dann ein zyklischer Fortschritt erfolgen. Die Figuren 26 bis 28 entsprechen in ihrem Bewegungsablauf den Figuren 20 bis 22, während Figur 19 einen Einfahrvorgang beschreibt.

Wie unmittelbar ersichtlich, verweilen die Trennschlitten 615, 616 zeitweilig in ihren Startpositionen 641, 641A bzw. Umkehrpositionen 645 und 645A. Insofern ist der dargestellte Phasenverlauf hierbei nicht zwingend, sondern kann nach Bedarf variiert werden. Hierbei wird bei diesem Ausführungsbeispiel davon ausgegangen, dass die Trennschlitten 615, 616 sich jeweils mit ihren Maximalbeschleunigungen beschleunigen, also ihre Geschwindigkeit erhöhen bzw. abbremsen. Insoweit sind Wartezeiten vorgesehen, wobei unmittelbar ersichtlich ist, dass durch diese Wartezeiten die Rohrlänge 649, die abgetrennt werden kann, bestimmt ist und dass auf diese Weise längere Rohrlängen 649 als bei den vorstehend beschriebenen Tandemtrennern bereitgestellt werden. Wie unmittelbar ersichtlich, können bei gleichphasigen Abläufen und maximaler Zyklusgeschwindigkeit die kürzesten Rohrlängen abgelängt werden. Durch den Phasenversatz sowie eine Verlängerung der Zykluszeit lässt sich dann die Rohrlänge beliebig verlängern, bis schließlich lediglich ein Trennschlitten ausreicht, um bei gegebenen Randbedingungen, wie Werkstückgeschwindigkeit und Maximalgeschwindigkeit des Schlittens, die gewünschte Rohrlänge abzutrennen.

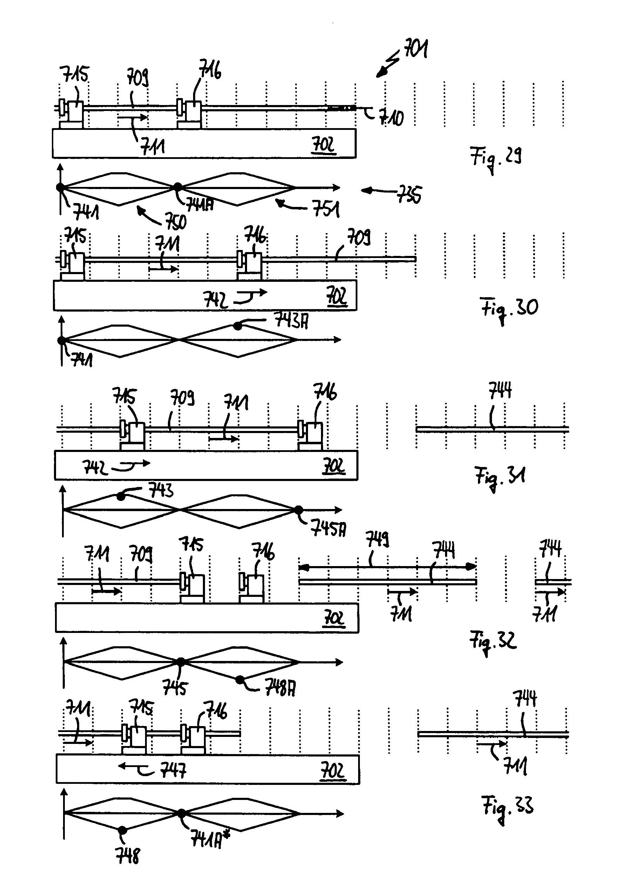

Ein weiterer Bewegungsablauf eines ersten Trennschlittens 715 und eines zweiten Trennschlittens 716 eines Tandemtrenners 701 ist in den Figuren 29 bis 33 illustriert. An einem Gestell 702 des Tandemtrenners 701 sind die beiden Trennschlitten 715, 716 geführt und die beiden Trennschlitten 715, 716 können gemäß einer Vorwärtsbewegung 742 und einer Rückwärtsbewegung 747 verfahren werden. Die beiden Trennschlitten 715, 716 trennen hierbei ein Rohr 709 in Rohrstücke 744 mit einer fünften Rohrlänge 749, welches bzw. welche in Transportrichtung 711 entlang einer Werkzeugachse 710 des Tandemtrenners 701 bewegt werden.

Die Bewegungsabläufe des ersten Trennschlittens 715 sind in der ersten Bewegungsgrafik 750 und die Bewegungsabläufe des zweiten Trennschlittens 716 sind in der zweiten Bewegungsgrafik 751 dargestellt. Nach der Darstellung des Geschwindigkeit/Ort-Koordinatensystems 735 aus der Figur 29 befinden sich beide Trennschlitten 715, 716 in einer Startposition 741 bzw. in einer Startposition 741A.

Der zweite Trennschlitten 716 führt in diesem Ausführungsbeispiel als erster der beiden Trennschlitten 715, 716 eine Vorwärtsbewegung aus und wird hierbei auf Transportgeschwindigkeit 742 beschleunigt (siehe Figur 30). Ist der zweite Trennschlitten 716 in einer zweiten Trennposition 743A angelangt, wird dort das Rohr 709 mittels des zweiten Trennschlittens 716 in Rohrstücke 744 mit der fünften Rohrlänge 749 getrennt.

Weiter bewegt sich der zweite Trennschlitten 716 in eine zweite Umkehrposition 745A hinein (siehe Figur 31), während der erste Trennschlitten 715 bis auf Transportgeschwindigkeit 742 in eine erste Trennposition 743 hinein beschleunigt wurde. In dieser ersten Trennposition 743 angelangt, schneidet der erste Trennschlitten 715 das Rohr 709 ebenfalls in Rohrstücke 744 mit der Rohrlänge 749.

Die beiden Trennschlitten 715, 716 bewegen sich jeweils für sich, aber synchron und phasenversetzt weiter (siehe Figur 32), wobei der erste Trennschlitten 715 in eine erste Umkehrposition 745 gebracht wird. Während dessen befindet sich der zweite Trennschlitten 716 bereits in einer Rückwärtsbewegung 747 und in einer zweiten Bremsposition 748A.

Weiter erreicht der zweite Trennschlitten 716 wieder eine Startposition 741A*, während sich der erste Trennschlitten 715 noch in seiner Rückwärtsbewegung 747 in einer Bremsposition 748 befindet. Gelangt auch der erste Trennschlitten 715 in eine Startposition (hier nicht gezeigt), beginnt der gesamte Bewegungszyklus des Tandemtrenners 701 erneut.

Es versteht sich, dass die in den Figuren 4 bis 33 dargestellten Bewegungsabläufe auch mit einer einzigen Anlage durchgeführt werden können. Dieses gilt insbesondere, wenn die Trennschlitten völlig unabhängig voneinander verlagerbar sind. Andererseits können die Abläufe nach Figuren 3 bis 18 auch mit Anlagen durchgeführt werden, bei denen die Trennschlitten starr miteinander verbunden sind. Es versteht sich darüber hinaus, dass weitere Trennschlitten vorgesehen sein können, wenn die Randbedingungen, wie die gegebene Rohrgeschwindigkeit und die eigentliche Dauer eines Trennvorganges und die minimale Zykluszeit, bei einer gewünschten Rohrlänge mit zwei in Phase mit maximaler Zyklusgeschwindigkeit laufende Trennschlitten eine Trennung nicht ermöglichen. Auch versteht es sich, dass die Trennschlitten je nach konkreter Verfahrungsführung nicht zwingend überlappende oder sich berührende Wege durchlaufen müssen. Ebenso kann auch die Weglänge nach Bedarf variiert werden. In komplexeren Bewegungsabläufen, insbesondere wenn Rohre mit verschiedenen Längen abgelängt werden sollen, ist eine Synchronisierung der Trennschlitten ebenfalls nicht zwingend erforderlich.

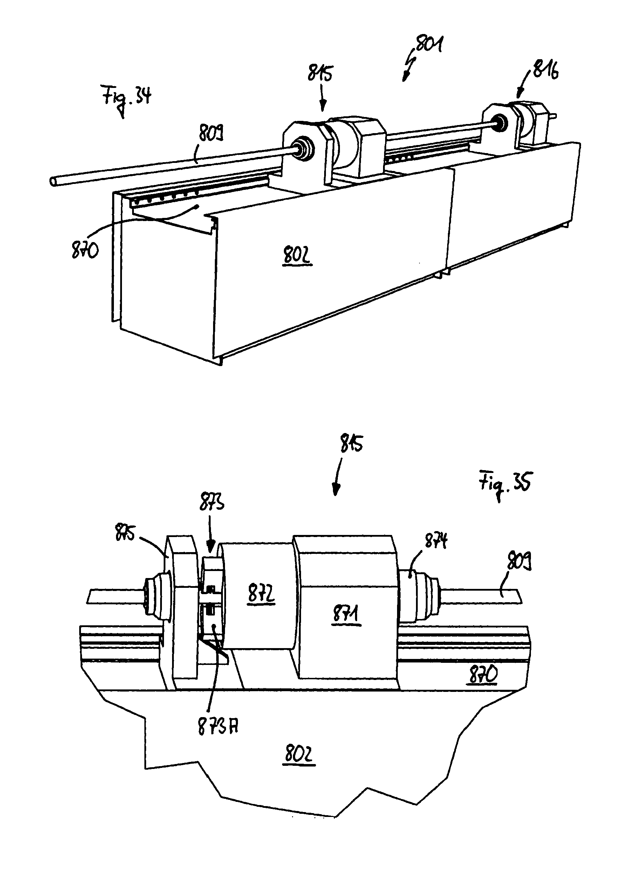

Der in den Figuren 34 bis 41 auch in Details gezeigte Tandemtrenner 801 weist ein Gestell 802 mit einem Verfahrbett 870 auf, an welchem ein erster Trennschlitten 815 und ein zweiter Trennschlitten 816 verfahrbar gelagert sind und kann die vorstehenden Abläufe umsetzen. Mittels der beiden Trennschlitten 815, 816 wird ein dem Tandemtrenner 801 zugeführtes Rohr 809 abgelängt.

Anhand der Darstellungen der Figuren 35 bis 41 ist der Aufbau des ersten Trennschlittens 815 schematisch detailliert dargestellt, wobei der zweite Trennschlitten entsprechend ausgestaltet ist.

Der Trennschlitten 815 umfasst einen Antrieb 871, der ein Drehfutter 872 mit einem daran angeordneten Schneidkopf 873 als eine umlaufende Schneideinrichtung antreibt. An seinem dem Drehfutter 872 entgegen gesetztem Ende des Antriebs 871 ist an dem Antrieb 871 ein Rohrspanner 874 als eine erste Halteeinrichtung vorgesehen, mittels welchem das Rohr 809 oder ein Teil des Rohres 809 geklemmt und insbesondere gegenüber dem Trennschlitten 815 fixiert werden kann.

Im Bereich des Schneidkopfes 873 ist des Weiteren ein Rohrhubspanner 875 als eine weitere Halteeinrichtung vorgesehen, mittels welchem das Rohr 809 oder ein Teil des Rohres 809 ebenfalls geklemmt und gegenüber dem Trennschlitten 815 fixiert werden kann. Darüber hinaus kann ein mittels des Rohrspanners 874 gespanntes Rohr 809 durch den Rohrhubspanner 875 auf Zug beansprucht werden, da der Rohrhubspanner 875 gegenüber dem Rohrspanner 874 verlagerbar ist.

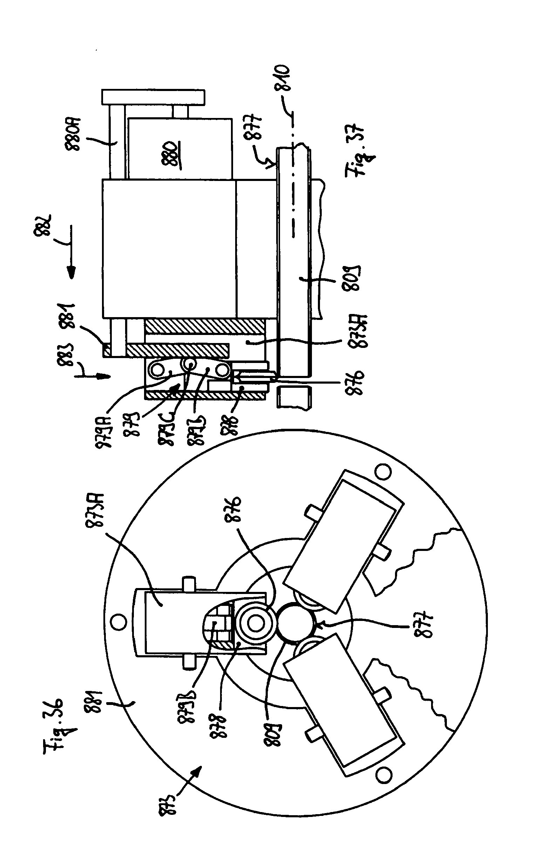

Ist das Rohr 809 derart auf Zug beansprucht, schneiden Trennmittel in Form von Schneidmesser 876 (siehe Figuren 36 bis 41) des Schneidkopfes 873 das Rohr 809 umlaufend an der Rohrmantelfläche 877 des Rohres 809 zumindest ein. Somit sind die vorliegenden Schneidmesser 876 außen um den Außendurchmesser umlaufende rotierende Schneidmesser. Die Trennmesser 876 sind an Trennmesserhalter 878 (hier nur exemplarisch beziffert) radial zu dem Rohr 809 verlagerbar befestigt. Die Trennmesserhalter 878 wiederum sind an Haltebacken 873A des Schneidkopfes 873 radial einstellbar angeordnet. Die Haltebacken 873A werden vorzugsweise synchron verstellt, um so eine gleichmäßige Bewegung aller Haltebacken 873A gegenüber der Werkstückachse 810 zu erzielen.

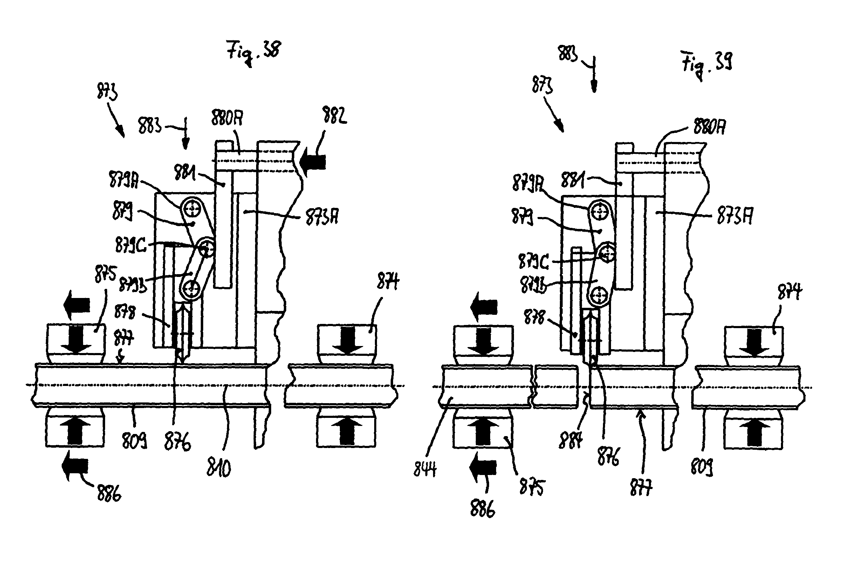

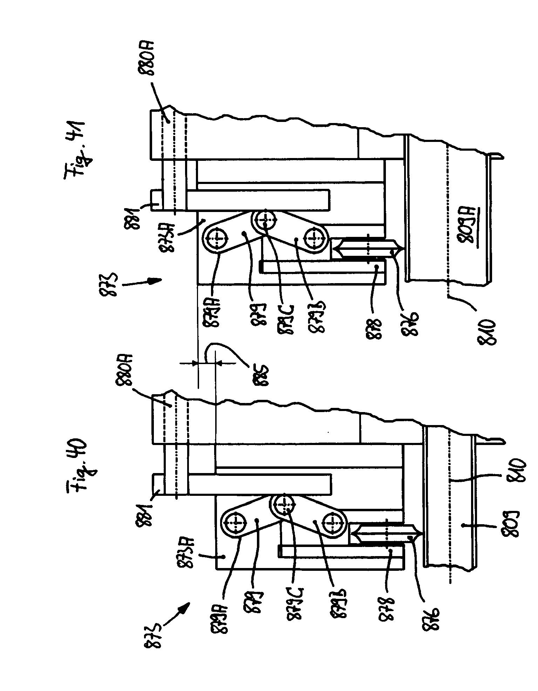

Der Vorteil bei einer derartigen Konstruktion ist unter anderem einerseits darin zu sehen, dass mittels der radial zu der Werkstückachse 810 einstellbaren Haltebacken 873A die Trennschlitten 815 und 816 schnell und baulich einfach an verschieden große Werkstückdurchmesser angepasst werden können (siehe Figuren 40 und 41). Mittels der zu dem Rohr 809 radial verlagerbaren Trennmesser 876 ist andererseits ein einfaches und schnelles Zustellen der Trennmesser 876 vor, während und nach dem Schneiden möglich (siehe Figuren 38 und 39).

Der Schneidkopf 873 umfasst eine Kniehebelmechanik 879, mit welcher eine zu einer Werkstückachse 810 bzw. eine zu dem Rohr 809 axial verlaufenden Kraft 882 (siehe Figur 37) in eine radial wirkende Kraft 883 umgewandelt wird.

Die Kniehebelmechanik 879 umfasst einen ersten Kniehebel 879A, der gelenkig an einem Haltebacken 873A befestigt ist. Ein weiterer Kniehebel 879B ist gelenkig mit der Trennmesserhalterung 878 verbunden. Beide Kniehebel 879A 879B der vorliegenden Kniehebelmechanik 879 sind untereinander gelenkig in einem Kniehebelgelenk 879C verbunden. Da derartige Kniehebelmechaniken aus dem Stand der Technik hinreichend bekannt sind, wird die vorliegende Kniehebelmechanik 879 nicht weiter erläutert.

Die axial verlaufende Kraft 882 wird mittels eines Zylinders 880 erzeugt und mittels einer Zylinderstange 880A und einer Schubplatte 881 auf die Kniehebelmechanik 879 übertragen. Die Schubplatte 881 ist hierbei parallel zu der Werkstückachse 810 verfahrbar.

Mittels der radial wirkenden Kraft 883 werden die Trennmesser 876 gegen das Rohr 809 gepresst und schneiden das Rohr 809 an seiner Rohrmantelfläche 877 ein, bis das zusätzlich auf Zug beanspruchte Rohr 809 an der Schnittstelle 884 reißt (siehe Figuren 38 und 39). Das Öffnen der Trennmesser 876 geschieht vorliegend vorteilhafter Weise mittels Fliehkräfte, die durch die Drehzahl des Schneidkopfes 873 bereitgestellt werden. In einer alternativen Ausführungsform geschieht das Verlagern der Trennmesser zur Gänze mittels Fliehkräfte, die durch Drehzahländerung des Schneidkopfes einstellbar sind und gegen eine Vorspannung, wie beispielsweise gegen Anpressfedern oder ähnliches, wirken.

Mit den Abbildungen nach den Figuren 38 und 39 ist das Zusammenspiel zwischen dem Trennkopf 873, dem Rohrspanner 874 und dem Rohrhubspanner 875 explizit illustriert.

In Vorbereitung zu einem Schneidvorgang wird das Rohr 809 auf einer ersten Seite des Trennschlittens 815 mittels des Rohrspanners 874 geklemmt. Auf der gegenüberliegenden Seite wird das Rohr 809 entsprechend mittels des Rohrhubspanners 875 geklemmt. Hierbei wird der Rohrhubspanner 875 relativ gegenüber den übrigen Bauteilen, die insbesondere gegenüber dem Rohrspanner 874, verlagert, so dass das Rohr 809 auf Zug 886 beansprucht ist. Gleichzeitig wird auf die Zylinderstange 880A eine axiale Kraft 882 ausgeübt, wodurch die Schubplatte 881 auf die Kniehebelmechanik 879 zu bewegt wird. Hierdurch wird die Kniehebelmechanik 879 in eine gestrecktere Lage (siehe Figur 39) gebracht, wodurch der Trennmesserhalter 878 und damit auch das Trennmesser 876 in Richtung der Werkstückachse 810 bewegt wird. Auf Grund dieser Zustellbewegung und der Drehung des Schneidkopfes 873 wird hierbei das Rohr 809 zumindest an seiner Mantelfläche 877 eingeschnitten. Auf Grund der Zugbelastung des Rohres 809 reißt das so angeritzte Rohr an der Schnittstelle 884.

Durch eine Entlastung der Zylinderstange 880A verlagern die Fliehkräfte die Trennmesser 876 in eine Ausgangslage zurück.

Um nun verschiedene Rohrdurchmesser eines Rohres 809 bzw. 809A (siehe Figuren 40 und 41) vorteilhaft mit dem vorliegenden Trennschlitten 815, 816 schneiden zu können, werden die Haltebacken 873A (hier nur explizit beziffert) um einen Weg 885 von der Werkstückachse 810 zurück verstellt. Damit werden auch die Trennmesser 876 von der Werkstückachse 810 weg bewegt, so dass zusätzlicher Raum entsteht, um ein Werkstück mit einem größeren Durchmesser entlang der Werkstückachse 810 durch die beiden Trennschlitten 815, 816 zu führen.

### Bezugszeichenliste:

- 1: Tandemtrenner
- 2: Gestell
- 3: Einlaufbereich
- 4: Auslaufbereich
- 5: erste Einlaufbereichrolle
- 6: zweite Einlaufbereichrolle
- 7: erste Auslaufbereichrolle
- 8: zweite Auslaufbereichrolle
- 9: Rohr
- 10: Werkstückachse
- 11: Transportrichtung
- 12: Einlaufbereichführung
- 13: Mittenbereichführung
- 14: Auslaufbereichführung
- 15: erster Trennschlitten
- 16: zweiter Trennschlitten
- 17: erster Pendelbereich
- 18: zweiter Pendelbereich
- 101: Tandemtrenner
- 102: Gestell
- 103: Einlaufbereich
- 104: Auslaufbereich
- 105: erste Einlaufbereichrolle
- 106: zweite Einlaufbereichrolle
- 107: erste Auslaufbereichrolle
- 108: zweite Auslaufbereichrolle
- 109: Rohr
- 110: Werkstückachse
- 111: Transportrichtung
- 113: Mittenbereichführung
- 115: erster Trennschlitten
- 116: zweiter Trennschlitten
- 120: optisch arbeitender Sensor
- 201: Tandemtrenner
- 202: Gestell
- 203: Einlaufbereich
- 204: Auslaufbereich
- 205: erste Einlaufbereichrolle
- 206: zweite Einlaufbereichrolle
- 207: erste Auslaufbereichrolle
- 208: zweite Auslaufbereichrolle
- 209: Rohr
- 210: Werkstückachse
- 211: Transportrichtung
- 213: Zwischenführung
- 215: erster Trennschlitten
- 216: zweiter Trennschlitten
- 225: erster mobiler Sensor
- 226: zweiter mobiler Sensor
- 302: Gestell
- 309: Rohr
- 310: Werkstückachse
- 311: Transportrichtung
- 315: Trennschlitten
- 330: Singletrenner
- 335: Koordinatensystem
- 336: Abszisse
- 337: Ordinate
- 338: obere Kurve
- 339: untere Kurve
- 340: Positionsmarker
- 341: Startposition
- 341 *: Startposition*
- 342: Transportgeschwindigkeit des Trennschlittens
- 343: erste Trennposition
- 343A: zweite Trennposition
- 344: Rohrstücke
- 345: Umkehrposition
- 346: Transportgeschwindigkeit des Rohres
- 347: Rückwärtsbewegung
- 348: Bremsposition
- 349: erste Rohrlänge
- 401: Tandemtrenner
- 402: Gestell
- 409: Rohr
- 410: Werkstückachse
- 415: erster Trennschlitten
- 416: zweiter Trennschlitten
- 441: Startposition
- 441*: Startposition*
- 441A: Startposition
- 441A*: Startposition*
- 442: Transportgeschwindigkeit des Trennschlittens
- 443: erste Trennposition
- 443A: zweite Trennposition
- 444: Rohrstücke
- 445: erste Umkehrposition
- 445A: zweite Umkehrposition
- 446: Transportgeschwindigkeit des Rohres
- 447: Rückwärtsbewegung
- 448: Bremsposition
- 448A: Bremsposition
- 449: zweite Rohrlänge
- 450: erste Bewegungsgrafik
- 451: zweite Bewegungsgrafik
- 501: Tandemtrenner
- 502: Gestell
- 509: Rohr
- 511: Transportrichtung
- 515: erster Trennschlitten
- 516: zweiter Trennschlitten
- 535: Geschwindigkeit/OrtKoordinatensystem
- 541: erste Startposition
- 541*: erste Startposition*
- 541A: zweite Startposition
- 541A*: zweite Startposition*
- 542: Transportgeschwindigkeit des Trennschlittens
- 543: erste Trennposition
- 543: zweite Trennposition
- 544: Rohrstücke
- 545: erste Umkehrposition
- 545A: zweite Umkehrposition
- 546: Transportgeschwindigkeit des Rohres
- 547: Rückwärtsbewegung
- 548: erste Bremsposition
- 548A: zweite Bremsposition
- 549: dritte Rohrlänge
- 550: erste Bewegungsgrafik
- 551: zweite Bewegungsgrafik
- 556: Überlappungsbereich
- 601: Tandemtrenner
- 602: Gestell
- 609: Rohr
- 611: Transportrichtung
- 615: erster Trennschlitten
- 616: zweiter Trennschlitten
- 641: erste Startposition
- 641*: erste Startposition*
- 641A: zweite Startposition
- 642: Transportgeschwindigkeit des Trennschlittens
- 643: erste Trennposition
- 643*: erste Trennposition*
- 643A: zweite Trennposition
- 644: Rohrstücke
- 645: erste Umkehrposition
- 645*: erste Umkehrposition*
- 645A: zweite Umkehrposition
- 645A*: zweite Umkehrposition*
- 646: Transportgeschwindigkeit des Rohres
- 647: Rückwärtsbewegung
- 648: erste Bremsposition, erste Bremsposition*
- 648A: zweite Bremsposition, zweite Bremsposition*
- 649: vierte Rohrlänge
- 650: erste Bewegungsgrafik
- 651: zweite Bewegungsgrafik
- 701: Tandemtrenner
- 702: Gestell
- 709: Rohr
- 710: Werkstückachse
- 711: Transportrichtung
- 715: erster Trennschlitten
- 716: zweiter Trennschlitten
- 741: erste Startposition
- 741A: zweite Startposition
- 741A*: zweite Startposition*
- 742: Transportgeschwindigkeit des Trennschlittens
- 743: erste Trennposition
- 743: zweite Trennposition
- 744: Rohrstücke
- 745: erste Umkehrposition
- 745: zweite Umkehrposition
- 746: Transportgeschwindigkeit des Rohres
- 747: Rückwärtsbewegung
- 748: Bremsposition
- 749: fünfte Rohrlänge
- 750: erste Bewegungsgrafik
- 751: zweite Bewegungsgrafik
- 801: Tandemtrenner
- 802: Gestell
- 809: Rohr
- 809A: Rohr mit größerem Durchmesser
- 810: Werkstückachse
- 815: erster Trennschlitten
- 816: zweiter Trennschlitten
- 844: Rohrstück
- 871: Antrieb
- 872: Drehfutter
- 873: Schneidkopf
- 873A: Haltebacken
- 874: Rohrspanner
- 875: Rohrhubspanner
- 876: Trennmesser
- 877: Rohrmantelfläche
- 878: Trennmesserhalter
- 879: Kniehebelmechanik
- 879A: erster Kniehebel
- 879B: weiterer Kniehebel
- 879C: Kniehebelgelenk
- 880: Zylinder
- 880A: Zylinderstange
- 881: Schubplatte
- 882: axiale Kraft
- 883: radial wirkende Kraft
- 884: Schnittstelle
- 885: Weg
- 886: Zugbeanspruchung

## Patentansprüche

1. Trenneinrichtung für im Wesentlichen lineare Werkstücke, insbesondere für im Wesentlichen kontinuierlich zugeführte, lineare Werkstücke, bei welcher ein Trennschlitten gemeinsam mit dem Werkstück bewegt wird und eine an dem Trennschlitten vorgesehene Trennvorrichtung während dieser Bewegung das Werkstück trennt, ***gekennzeichnet durch** wenigstens* zwei hintereinander angeordnete Trennschlitten.

2. Trenneinrichtung nach Anspruch 1, ***dadurch gekennzeichnet, dass*** wenigsten ein Trennschlitten (15, 16) für seine Bewegung mit dem Werkstück unabhängig von den übrigen Trennschlitten (15, 16) angetrieben ist.

3. Trenneinrichtung nach Anspruch 2, ***dadurch gekennzeichnet, dass*** die Bewegungsbahnen der Trennschlitten (15, 16) überlappen.

4. Trenneinrichtung nach einem der vorstehenden Ansprüche, ***dadurch gekennzeichnet, dass*** an wenigstens einem Trennschlitten (15, 16) eine Werkstückführung vorgesehen ist.

5. Trenneinrichtung nach einem der vorstehenden Ansprüche, ***gekennzeichnet durch*** eine Zwischenwerkstückführung (12, 13, 14), die zwischen zwei Trennschlitten (15, 16) unabhängig von deren Bewegungsablauf angeordnet ist.

6. Trenneinrichtung nach Anspruch 5, ***dadurch gekennzeichnet, dass*** die Zwischenwerkstückführung (12, 13, 14) ortsfest angeordnet ist.

7. Trenneinrichtung nach Anspruch 5, ***dadurch gekennzeichnet, dass*** die Zwischenwerkstückführung (12, 13, 14) gemeinsam mit dem Werkstück (9) bewegbar angeordnet ist.

8. Trenneinrichtung für im Wesentlichen lineare Werkstücke, insbesondere für im Wesentlichen kontinuierlich zugeführte, lineare Werkstücke, insbesondere auch nach einem der vorstehenden Ansprüche, bei welcher ein Trennschlitten gemeinsam mit dem Werkstück bewegt und eine an dem Schlitten vorgesehene Trennvorrichtung während dieser Bewegung des Werkstück trennt, wobei an dem Schlitten wenigstens zwei Halteeinrichtungen vorgesehen sind, welche, entlang der Werkstückachse gesehen, beidseits einer Trennvorrichtung angeordnet sind, ***dadurch gekennzeichnet, dass*** wenigstens eine der beiden Halteeinrichtungen (874, 875) entlang der Werkstückachse (810) bezüglich der anderen Halteeinrichtung (875) und/oder bezüglich des Trennschlittens (815) bzw. bezüglich der Trennvorrichtung verlagerbar ist.

9. Trenneinrichtung nach Anspruch 8, ***dadurch gekennzeichnet, dass*** die Trenneinrichtung (815, 816) ein rotierendes Futter (872) für ein Trennwerkzeug (876) umfasst, welches wenigstens einen radial verschiebbaren Trennmesserhalter (878) für wenigstens ein Trennwerkzeug (876) und Mittel zum radialen Verlagern des Trennmesserhalters (878) für einen Trennvorgang aufweist, wobei die Verlagerungsmittel einen Kniehebel (879) umfassen

10. Trenneinrichtung nach Anspruch 9, ***dadurch gekennzeichnet, dass*** ein Arm des Kniehebels (879) an dem Trennmesserhalter (878) und der andere Arm des Kniehebels (879) an einem Halteteil (Haltebacken 873A) für das Trennwerkzeug (876) angeordnet ist und die Verlagerungsmittel an dem Knie angreifen.

11. Trenneinrichtung nach Anspruch 9 und 10, ***dadurch gekennzeichnet, dass*** die Verlagerungsmittel eine Schubplatte (881), vorzugsweise eine mit der Trenneinrichtung (815, 816) umlaufende Schubplatte (881), umfassen.

12. Trenneinrichtung nach einem der Ansprüche 8 bis 11, ***dadurch gekennzeichnet, dass*** die Trenneinrichtung (815, 816), insbesondere ein Schneidkopf (873) der Trenneinrichtung (815, 816), durch Fliehkräfte geöffnet wird.

13. Trenneinrichtung nach einem der Ansprüche 8 bis 17, ***gekennzeichnet, durch*** Mittel zum radialen Einstellen der Trennmittel hinsichtlich unterschiedlicher Werkstückdurchmesser.

14. Trenneinrichtung nach Anspruch 13, ***dadurch gekennzeichnet, dass*** die Einstellmittel Haltebacken umfassen, an welchen die Trennmittel oder Trennmittelhalterungen gelagert sind.

15. Trenneinrichtung nach Anspruch 14, ***dadurch gekennzeichnet, dass*** an den Haltbacken ein Kniehebel, insbesondere ein Arm eines Kniehebels, gelagert ist.

16. Trenneinrichtung nach einem der Ansprüche 14 oder 15, ***dadurch gekennzeichnet, dass*** die Haltebacken an dem Trennschlitten in Bezug auf eine Werkstückachse radial verstellbar gelagert sind.

17. Verfahren zum Trennen von im Wesentlichen linearen Werkstücken, insbesondere auch von im Wesentlichen kontinuierlich zugeführten, linearen Werkstücken mittels einer Schneideinrichtung, ***dadurch gekennzeichnet, dass*** das Werkstück beidseits einer Trennfläche ergriffen und unter Zug mit der Schneideinrichtung an der Trennfläche geschnitten wird.

18. Trennverfahren nach Anspruch 17, ***dadurch gekennzeichnet, dass*** der Schneidvorgang und das Ziehen derart aufeinander abgestimmt sind, dass die hierbei erzeugte Trennkante (884) eine gedehnte Rohrwandung und/oder eine Reiß- oder Bruchkante aufweist.

19. Trennverfahren nach Anspruch 17 oder 18, ***dadurch gekennzeichnet, dass*** die Schneideinrichtung während des Trennens mit dem Werkstück bewegt wird.

20. Verfahren zum Trennen von im Wesentlichen linearen Werkstücken, insbesondere auch von im Wesentlichen kontinuierlich zugeführten, linearen Werkstücken mittels einer Schneideinrichtung, die während des Trennens mit dem Werkstück bewegt wird, ***dadurch gekennzeichnet, dass*** das Werkstück beidseits einer Trennfläche ergriffen und unter Zug und/oder Bruch getrennt wird.

21. Verfahren zum Trennen von im Wesentlichen linearen Werkstücken, insbesondere von im Wesentlichen kontinuierlich zugeführten, linearen Werkstücken, insbesondere auch nach einem der vorstehenden Ansprüche, ***dadurch gekennzeichnet, dass*** zwei hintereinander angeordnete Trennschlitten mit einem Phasenversatz hin und her bewegt werden.

22. Trennverfahren nach einem der Ansprüche 17 bis 21, ***dadurch gekennzeichnet, dass*** eine um das Werkstück herum umlaufende Schneideinrichtung an einem Trennschlitten mit dem Werkstück während des Schneidens bewegt wird und um dieses herum zum Schneiden umläuft.
